# EUROPÄISCHE PATENTSCHRIFT

(11) **EP 1 485 276 B1**
(45) Veröffentlichungstag und Bekanntmachung des Hinweises auf die Patenterteilung: **02.08.2006**
(21) Anmeldenummer: 03720183.7
(22) Anmeldetag: 15.03.2003
(51) Int. Cl.: B60R 22/48

(54) **SCHALTER FÜR EIN GURTSCHLOSS**
ACTUATOR FOR A BELT LATCH MECHANISM
ACTIONNEUR POUR FERMETURE DE CEINTURE

(30) Priorität: 19.03.2002 DE 20204318 U
(43) Veröffentlichungstag der Anmeldung: 15.12.2004
(73) Patentinhaber: Eao Esa Zweigniederlassung der Eao Lumitas GmbH, 08209 Auerbach (DE); AUTOLIV DEVELOPMENT AB, 447 83 Vargarda (SE)
(72) Erfinder: EBERT, Bernd, 08228 Rodewisch (DE)
(74) Vertreter: Helge, Reiner
(86) Internationale Anmeldenummer: PCT/DE2003/000840
(87) Internationale Veröffentlichungsnummer: WO 2003/078218

(56) Entgegenhaltungen:
- US-A- 4 163 128
- US-A- 4 608 469
- US-A- 5 590 904
- US-A- 5 758 393
- US-A- 6 002 325

## Beschreibung

Die vorliegende Erfindung betrifft einen Schalter, der in einem Gurtschloß von Rückhaltesystemen in Kraftfahrzeugen zur Anwendung kommt und die ordnungsgemäße Verriegelung der in das Gurtschloß eingesteckten Zunge des Sicherheitsgurtes anzeigt.

Bekannt ist aus der DE 43 38 485 A1 ein für die fail-safe-Abfrage eingerichteter Sicherheitsgurtverschluß mit Mikroschalter, wobei der Mikroschalter mit zwei am Verriegelungsvorgang des Verschlusses unabhängig voneinander beteiligten Funktionsteilen derart gekoppelt ist, daß der Mikroschalter nur bei den beiden gleichzeitig in der Verriegelungsposition stehenden Funktionsstellen des Verschlusses seine geschlossene und für die Auslösung weiterer Funktionselemente der Sicherheitseinrichtung eingerichtete Stellung einnimmt.

Aus der US 6 002 325 A ist ein gattungsgemäße Schalter bekannt. Weiterhin ist von der Firma Eduard Hartmann GmbH ein Schalter bekannt, der in Gurtschlössem eingesetzt wird. Bei diesem Schalter handelt es sich um einen Doppelkontaktschalter, dessen Kontaktfedern bzw. -zungen im unbelasteten Zustand an den Berührungspunkten gegenseitig anliegen und den Kontakt herstellen. Eine der beiden Zungen ist dabei als Doppelkontaktzunge ausgebildet, um die Schaltsicherheit zu erhöhen. Der Schalter ist so ausgebildet, daß er seitlich im Gurtschloßgehäuse angeordnet ist und zwar derart, daß beim Einstecken der Gurtzunge ein Schieber aus einem Isolationsmaterial zwischen die Kontaktzungen geschoben wird. Dieser Schieber verbleibt nach dem Einrasten der Gurtzunge zwischen den Kontaktzungen des Schalters und trennt damit den Kontakt. Somit wird angezeigt, daß der Sicherheitsgurt angelegt und ordnungsgemäß im Schloß verriegelt ist.

Da der Schalter ein oben offenes Gehäuse aufweist, um ein Bewegen des Schiebers aus einem Isolationsmaterial zwischen die Kontaktzungen zu ermöglichen, können von außen durch die Öffnung des Gurtschloßgehäuses Fremdstoffe, wie zum Beispiel Flüssigkeiten oder feste Teilchen, eindringen. Dies kann dazu führen, daß die Sicherheitsfunktion beeinträchtigt wird, da eine Kontaktunterbrechung fälschlicherweise eine ordnungsgemäße Verriegelung der Gurtzunge im Schloß signalisiert.

Die Kontaktzungen sind im oberen Bereich nach außen gebogen ausgeführt, um ein Einführen des Schiebers zwischen die Kontaktzonen zu erleichtern. Dadurch ergibt sich im oberen Bereich eine annähernde V-Form. Eindringende Fremdstoffe lagern sich in diesem Bereich ab und werden durch den Schieber dann direkt in den Kontaktbereich gebracht.

Desweiteren ist bei diesem Schalter eine automatisierte Montage bei der Herstellung nicht möglich, da die Kontaktzungen mit entsprechenden Kabeln verbunden werden müssen, bevor sie in das Schaltergehäuse eingesetzt werden und die Schaltzungen derart ausgebildet sind, daß sie nach dem Einbau unter einer bestimmten Vorspannung stehen. Mit den angebundenen Kabeln müssen die Kontaktzungen weitgehend von Hand in das Schaltergehäuse eingesetzt werden.

Der Erfindung liegt daher die Aufgabe zugrunde, einen Schalter für ein Gurtschloß von Sicherheitsgurtsystemen in Kraftfahrzeugen derart auszubilden, daß der Kontaktbereich weitgehend vor eindringenden Fremdstoffen geschützt ist und dieser für eine vollautomatisierte Montage bei der Herstellung des Schalters mit anschließender weitgehender automatisierter Anbindung des Kabels geeignet ist.

Erfindungsgemäß wird die Aufgabe durch einen Schalter nach Anspruch 1 gelöst.

Der Schalter kann als Öffner oder Schließer ausgebildet sein. Beim als Öffner ausgelegten Schalter durchdringen sich die Kontaktbleche gegenseitig, wobei der Kontakt durch Einwirkung eines Schiebers auf eine Kontaktfeder trennbar ist. Beim als Schließer ausgelegten Schalter durchdringen sich die Kontaktbleche nicht, wobei hier der Kontakt durch Einwirkung eines Schiebers auf eine Kontaktfeder schließbar ist.

Das nicht durch den Schieber betätigte Kontaktblech ist als Festkontaktblech ausgebildet, wobei infolge der Spannkraft des vom Schieber betätigten Kontaktbleches, das als Kontaktfeder ausgebildet ist, im unbetätigten Zustand die beiden Zungen unabhängig voneinander elastisch durchgebogen werden. Der hierfür erforderliche Freiraum ist im Gehäuseinnenraum vorgesehen. Infolge der Durchbiegung der Kontaktzungen entsteht an den Berührungspunkten sowohl beim Öffnen als auch beim Schließen des Kontaktes eine Kontaktreibung. Diese führt zu einer gewissen Selbstreinigung im Kontaktbereich, was sich positiv auf die Schaltzuverlässigkeit des Schalters auswirkt. Das Schalten des Kontaktes erfolgt durch Einwirkung des Schiebers auf die Kontaktfeder. Diese ist im Kontaktbereich in etwa hammerförmig ausgebildet und derart gebogen ausgeführt, daß der bogenförmige Teil in einen seitlich des Gehäuseinnenraumes angeordneten Kanal ragt.

Durch den hammerförmig ausgebildeten Bereich der Kontaktfeder wird sichergestellt, daß die Zungen der Doppelkontaktzunge zuverlässig kontaktiert werden. Das Schalten des Kontaktes erfolgt durch den Schieber, indem dieser beim Einstecken der Gurtzunge in das Gurtschloß bewegt wird. Der Schieber trifft auf den bogenförmigen Bereich Kontaktfeder. Bei weiterem Bewegen wird der bogenförmige Bereich in Richtung des Kontaktraumes bewegt und das Schalten herbeigeführt.

Anhand eines Ausführungsbeispieles soll die Erfindung näher erläutert werden. Die dazugehörige Figur zeigt einen Schnitt durch den erfindungsgemäßen Schalter.

Der Schalter, der als Öffner ausgelegt ist, besteht aus dem Schaltgehäuse 1, das mittels eines hier nicht dargestellten Deckels oberhalb des Anschlußraumes 5 verschlossen wird.
Der Schalter weist einen im Kontaktbereich geschlossenen Gehäuseinnenraum 2a auf. Im unteren Bereich des Schalters ist ein Anschlußraum 5 vorgesehen. In diesem enden das Festkontaktblech 6 und die Kontaktfeder 7. Diese können hier mit den Anschlußleitungen 10 verbunden werden. Der Anschlußraum 5 ist beidseitig offen ausgebildet.
Die Kontaktfeder 7 weist einen bogenförmigen Bereich 9 und einen hammerförmig ausgebildeten Bereich 8 auf. Der bogenförmige Bereich 9 durchdringt das Festkontaktblech 6 im Bereich der Doppelkontaktzungen und ragt bis in den Kanal 3 hinein. Durch Abwärtsbewegung des Schiebers 4 infolge des Einstecken der Gurtzunge in das Gurtschloß wird die Kontaktfeder 7 betätigt und der Kontakt getrennt.
Der hammerförmig ausgebildete Bereich 8 der Kontaktfeder 7 bildet beidseitig die Anlagefläche an den Zungen des Festkontaktbleches 6 und damit die beiden Kontaktstellen des Schalters.

Die Kontaktzungen des Festkontaktbleches 6 stehen im kontaktierten Zustand unter einer Biegespannung und sind deshalb elastisch durchgebogen. Sie bewegen sich bei Betätigung der Kontaktfeder zurück in den ungebogenen Zustand. Dabei entsteht im Kontaktbereich eine Kontaktreibung. Diese entsteht auch beim Schließen des Kontaktes, wenn bei der Aufwärtsbewegung des Schiebers 4 die Kontaktfeder 7 in den unbetätigten Zustand zurückfedert.

Der so ausgebildete Schalter kann vollautomatisch montiert werden. Mittels entsprechender Bestückungsautomaten können der Festkontakt 6 und die Kontaktfeder 7 eingesetzt werden, und zwar in der Reihenfolge, daß zuerst die Kontaktfeder 7 eingesetzt wird und anschließend das Festkontaktblech 6. Dieses wird nach dem Einsetzen dann bis in seine endgültige Einbaulage verschoben. Nach dem Verschließen des Gehäuseinnenraumes 2 mittels eines Deckels kann der Schalter auf seine Funktion geprüft werden. Anschließend können dann die Anschlußleitungen 10 angebracht werden. Dies erfolgt weitgehend automatisiert durch Crimpen oder Verschweißen, da das Gehäuse 1 im Bereich des Anschlußraumes 5 beidseitig offen ist.

Der Kontaktraum 2 ist von oben her geschlossen ausgebildet, so daß Fremdkörper nicht in den Kontaktbereich eindringen können. Somit ist ein Schutz vor Funktionsausfällen durch Verschmutzung gewährleistet.

### Bezugszeichenaufstellung

- 1 -: Schaltergehäuse
- 2 -: Gehäuseinnenraum
- 2a-: Oberer Gehäuseinnenraum
- 3 -: Kanal
- 4 -: Schieber
- 5 -: Anschlußraum
- 6 -: Festkontaktblech
- 7 -: Kontaktfeder
- 8 -: hammerförmiger Bereich
- 9 -: bogenförmiger Bereich
- 10 -: Anschlußleitungen
- 11 -: Rahmen

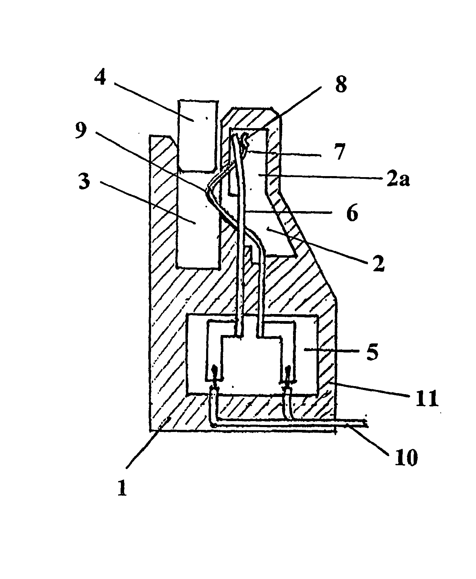

## Patentansprüche

1. Schalter für ein Gurtschloß von Rückhaltesystemen von Kraftfahrzeugen zur Anzeige, daß die Gurtzunge in das Gurtschloß eingesteckt und ordnungsgemäß verriegelt ist, mit zwei Kontaktblechen, wobei ein Kontaktblech nach seinem kontaktgebenden Ende hin als Doppelkontaktzunge ausgebildet ist und wobei
die kontaktgebenden Bereiche der Kontaktbleche in einem vor Fremdstoffen geschützten oberen Gehäuseinnenraum (2a) des Schaltergehäuses (1) vorgesehen sind, **dadurch gekennzeichnet, daß**, ein Kontaktblech als Kontaktfeder (7) mit einem hammerförmigen Bereich (8) am kontaktgebenden Ende und einem mittleren bogenförmigen Bereich (9) ausgebildet ist und der bogenförmige Bereich (9) der Kontaktfeder (7) in einen seitlich vom Gehäuseinnenraum (2a) angeordneten Kanal (3) hineinragt und der Kontakt durch Bewegen eines Schiebers (4) im Kanal (3) schaltbar ist.

2. Schalter nach Anspruch 1,
**dadurch gekennzeichnet, daß**
sich die Kontaktbleche gegenseitig durchdringen, wobei der Kontakt durch Einwirkung des Schiebers (4) auf die Kontaktfeder (7) trennbar ist.

3. Schalter nach Anspruch 1,
**dadurch gekennzeichnet, daß**
sich die Kontaktbleche nicht gegenseitig durchdringen, wobei der Kontakt durch Einwirkung des Schiebers (4) auf die Kontaktfeder (7) schließbar ist.

4. Schalter nach wenigstens einem der vorangehenden Ansprüche,
**dadurch gekennzeichnet, daß**
das nicht durch den Schieber (4) betätigte Kontaktblech ein Festkontaktblech (6) ist, das zum Kontaktbereich hin als Doppelkontaktzunge ausgebildet ist, wobei infolge der Spannkraft des von dem Schieber (4) betätigten Kontaktbleches, das als Kontaktfeder (7) ausgebildet ist, und im kontaktierten Zustand beide Kontaktzungen unabhängig voneinander durchbiegbar sind.

5. Schalter nach wenigstens einem der vorangehenden Ansprüche,
**dadurch gekennzeichnet, daß**
das Schaltergehäuse (1) an seinem dem Kontaktbereich entgegengesetzten Ende einen vorzugsweise auf der Vorder- und Rückseite offenen Rahmen (11) enthält, der den Anschlußraum (5) umschließt, in den die Kabelanschlußstellen der beiden Kontaktbleche hineinragen.

## Claims

1. Switch for a belt lock of restraining systems of motor vehicles for indicating that the belt tongue is plugged into the belt lock and correctly locked, comprising two contact plates, wherein one contact plate is constructed towards its contact-making end as a double-contact tongue and wherein the contact-making regions of the contact plates are provided in an upper housing interior space (2a), which is protected against foreign bodies, of the switch housing (1), **characterised in that** one contact plate is constructed as a contact spring (7) with a hammer-shaped region (8) at the contact-making end and a centre, curved region (9) and the curved region (9) of the contact spring (7) protrudes into a channel (3), which is arranged laterally of the housing interior space (2a), and the contact is switchable by moving a slide (4) in the channel (3).

2. Switch according to claim 1, **characterised in that** the contact plates penetrate one another, wherein the contact is separable by action of the slide (4) on the contact spring (7).

3. Switch according to claim 1, **characterised in that** the contact plates do not penetrate one another, wherein the contact is closable by action of the slide (4) on the contact spring (7).

4. Switch according to at least one of the preceding claims, **characterised in that** the contact plate not actuated by the slide (4) is a fixed contact plate (6) which is constructed towards the contact region as a double-contact tongue, wherein as a consequence of the stressing force of the contact plate, which is actuated by the slide (4) and constructed as contact spring (7), and in the contacted state the two contact tongues can bend independently of one another.

5. Switch according to at least one of the preceding claims, **characterised in that** the switch housing (1) has at its end opposite the contact region a frame (11) which is preferably open on the front side and rear side and which encloses the connecting space (5) into which the cable connecting points of the two contact plates project.

## Revendications

1. Interrupteur pour attaches de systèmes de retenue dans des véhicules ayant pour tache de signaler si la languette de la ceinture de sécurité a été bien insérée et dûment bloquée, cet interrupteur étant muni de deux tôles de contact dont l'une est conçue, vers son bout contactant, en tant que double languette de contact, et où les zones actives (celles qui assurent le propre contact) sont disposées dans la partie supérieure de l'intérieur du boîtier (2a) qui, elle, est protégée contre tous corps étrangers, du boîtier de l'interrupteur (1),
**caractérisé par le fait**
**qu'**une des deux tôles de contact est conçue en tant que ressort de contact (7) qui, au niveau de son bout contactant, présente une zone malléiforme (8) et une zone voûtée (9), où la zone voûtée (9) du ressort de contact (7) dépasse sur un canal (3) disposé à côté de l'intérieur du boîtier (2a) et où le contact peut être piloté dans le canal (4) au moyen des mouvements d'un coulisseau (4).

2. Interrupteur suivant la revendication 1,
**caractérisé par le fait**
**que** les tôles de contact se pénètrent réciproquement, le contact pouvant être ouvert par l'effort qui exerce le coulisseau (4) sur le ressort de contact (7).

3. Interrupteur suivant la revendication 1,
**caractérisé par le fait**
**que** les tôles de contact ne se pénètrent pas réciproquement, le contact pouvant être fermé par l'effort qui exerce le coulisseau (4) sur le ressort de contact (7).

4. Interrupteur suivant au moins l'une des revendications ci-dessus,
**caractérisé par le fait**
**que** la tôle de contact n'étant pas actionnée par le coulisseau (4) est une tôle de contact fixe (6) qui, vers sa zone de contact, est conçue en tant que double languette de contact et où, grâce à l'effort de tension provenant de la tôle de contact actionnée par le coulisseau (4) qui, elle, est conçue en tant que ressort de contact (7), les deux languettes de contact peuvent être fléchies lorsqu'elles se trouvent en contact.

5. Interrupteur suivant au moins l'une des revendications ci-dessus,
**caractérisé par le fait**
**que** le boîtier de l'interrupteur (1) est équipé, au niveau de son extrémité opposée à la zone de contact, d'un cadre (11) dont les parties devant et arrière sont de préférence ouvertes, et qui enferme l'espace de raccordement (5) sur lequel dépassent les points de raccordement des câbles pour les deux tôles de contact.
